(19) Europäisches Patentamt
European Patent Office
Office européen des brevets

(11) Veröffentlichungsnummer: **0 136 527 B1**

(12) **EUROPÄISCHE PATENTSCHRIFT**

(45) Veröffentlichungstag der Patentschrift: **24.04.91**

(51) Int. Cl.⁵: **C08G 73/10**, C08G 73/14

(21) Anmeldenummer: **84110171.0**

(22) Anmeldetag: **27.08.84**

Die Akte enthält technische Angaben, die nach dem Eingang der Anmeldung eingereicht wurden und die nicht in dieser Patentschrift enthalten sind.

# (54) Verfahren zur Herstellung von Polyamidimiden.

(30) Priorität: **06.09.83 DE 3332030**

(43) Veröffentlichungstag der Anmeldung:
**10.04.85 Patentblatt 85/15**

(45) Bekanntmachung des Hinweises auf die Patenterteilung:
**24.04.91 Patentblatt 91/17**

(84) Benannte Vertragsstaaten:
**CH DE FR GB IT LI**

(56) Entgegenhaltungen:
**EP-A- 0 104 417**
**DE-A- 2 947 117**
**DE-B- 1 770 202**
**FR-A- 2 503 171**
**DE-A- 2 542 706**
**DE-A- 3 240 934**
**DE-B- 1 956 512**

(73) Patentinhaber: **BAYER AG**
**W-5090 Leverkusen 1 Bayerwerk(DE)**

(72) Erfinder: **Zecher, Wilfried, Dr.**
**Treptowerstrasse 6**
**W-5090 Leverkusen 1(DE)**
Erfinder: **Dhein, Rolf, Dr.**
**Deswatinesstrasse 30**
**W-4150 Krefeld 1(DE)**
Erfinder: **Reinking, Klaus, Dr.**
**Robert-Stolz-Strasse 16b**
**W-5632 Wermelskirchen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Herstellung von Polyamidimiden.

Es ist bereits bekannt, daß man aliphatisch-aromatische Polyamidimide erhält, wenn Polyisocyanate mit cyclischen Polycarbonsäureanhydriden und Lactamen (DAS 1 770 202) oder Polyamiden (DAS 1 956 512) zur Umsetzung gebracht werden. Die Reaktionsprodukte zeichnen sich durch hohe Erweichungstemperaturen und gute Elastizitätswerte aus und finden als hochtemperaturbeständige Beschichtungen, z.B. auf dem Elektroisolierlack-Sektor, Verwendung.

Es wurde nun gefunden, daß thermoplastische Polymere mit ausgezeichneten Eigenschaften bei der Kondensation von organischen Polyisocyanaten wie aliphatischen, alipatisch-aromatischen und aromatischen Diisocyanaten mit cyclischen Polycarbonsäureanhydriden und Lactamen oder Polyamiden bei Temperaturen von 0 - 400 °C und gegebenenfalls in einem Lösungsmittel erhalten werden, indem die Kondensation oder die Aufarbeitung in Gegenwartvon 0,2 - 15 Gew.-%, vorzugsweise von 2 - 6 Gew.-%, bezogen auf Gesamtgewicht der Reaktanten, eines einfach oder mehrfach mit Alkylresten mit 1 bis 20 C-Atomen und/ oder mit Cycloalkyl-Resten und/oder mit Aryl-Resten mit 6 - 12 C-Atomen substituierten Phenols erfolgen, wobei bei alleinigem Vorliegen von Alkylsubstituenten diese insgesamt mindestens 2 C-Atome haben.

Es wurde weiterhin gefunden, daß diese Polymere z.B. in Lösungsmitteln hergestellt und dann in einem Eindampfextruder bei Temperaturen von 250 - 400 °C, gegebenenfalls unter Vakuum, aufkonzentriert werden können.

Gegenstand der Erfindung ist daher ein Verfahren zur Herstellung von Kresol-löslichen Polyamidimiden aus Polyisocyanaten, cyclischen Polycarbonsäureanhydriden und Lactamen oder Polyamiden, dadurch gekennzeichnet, daß die Herstellung oder Aufarbeitung in Gegenwart von 0,2 - 15 Gew.-% eines oder eines Gemisches einfach oder mehrfach mit Alkyl-Resten mit 1 bis 20 C-Atomen und/oder mit Cycloalkyl-Resten und/oder mit Aryl-Resten mit 6 bis 12 C-Atomen substituierter Phenole erfolgt, wobei bei alleinigem Vorliegen von Alkyl-Substituenten diese insgesamt mindestens 2 C-Atomen haben müssen, und das Polyamidimid in einer ersten Stufe nach einem bekannten Verfahren in einem Lösungsmittel hergestellt und dann in einem Eindampfextruder bei Temperaturen von 240 - 400 °C, gegebenenfalls unter Vakuum, aufkonzentriert und auskondensiert wird.

Die Reaktionsprodukte sind z.B. thermoplastisch und zeichnen sich durch gute mechanische Werte wie Schlagzähigkeit, Zugfestigkeit, E-Moduli und Wärmeformbeständigkeit aus. Es ist überraschend, daß die erfindungsgemäßen Polyamidimide bei den hohen Temperaturen die für das Extrudieren und den Spritzguß von Polyimiden notwendig sind, thermoplastisch verarbeitet werden können.

In allgemeinen können bei Imiden für diesen Anwendungsbereich als Amino-Komponente nur thermisch sehr stabile Reste, z.B. 4,4'-substituierte Diphenylether, eingesetzt werden. Es ist daher überraschend, daß die erfindungsgemäßen Polymere unter diesen Bedingungen, insbesondere bei der Aufkonzentration im Extruder, nicht verspröden und unschmelzbar werden, wie dies bei Reaktionsprodukten aus Polyisocyanaten und cyclischen Polycarbonsäureanhydriden zu beobachten ist.

Im erfindungsgemäßen Verfahren können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylen-methylen-struktur, technische Gemische aus Toluylendiisocyanaten, m-Phenylendiisocyanat und die symmetrischen Verbindungen 4,4'-Diisocyanato-diphenylmethan, 4,4'-Diisocyanato-diphenylether, Napthylen-(1,5)-diisocyanat, p-Phenylendiisocyanat, 4,4'-Diisocyanato-diphenyl-dimethylmethan, analoge hydro-aromatische Diisocyanate wie 4,4'-Diisocyanato-dicyclohexylmethan sowie aliphatische Diisocyanate mit 2 - 12-C-Atomen wie Hexamethylendiisocyanat, von Isophoron abgeleitete Diisocyanate und deren Gemische.

An Stelle der Isocyanate können auch Verbindungen eingesetzt werden, die unter den Reaktionsbedingungen als Isocyanate reagieren, vorzugsweise die Additionsverbindungen von Phenolen und Lactamen, z.B. von Phenol, technischen Kresolgemischen und Caprolactam oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbodiimide und Isocyanato-isocyanurateaus den beschriebenen Polyisocyanaten.

Zur Regulierung des Molekulargewichts können auch monofunktionelle Isocyanate, wie z.B. Phenylisocyanat, Tolylisocyanat, Cyclohexylisocyanat, Stearylisocyanat,ω,ω,ω-Trifluorethylisocyanat und 3,5-Trifluormethyl-phenylisocyanat oder die entsprechenden Amine eingesetzt werden.

Als erfindungsgemäße cyclische Polycarbonsäureanhydride können Verbindungen verwendet werden, wie sie in DE-OS 1770 202 und DE-OS 2 542 706 beschrieben werden, vorzugsweise Polycarbonsäureanhydride der allgemeinen Formel (I)

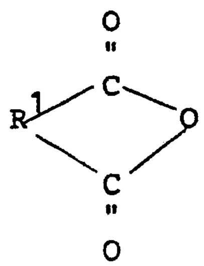

(I),

in welcher

$R^1$ einen gegebenenfalls substituierten aliphatischen $C_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 c-Atomen bedeutet, der neben der cyclischen Anhydridgruppe mindestens noch eine weitere cyclische Anhydridgruppe oder eine Carboxylgruppe trägt,

bedeutet.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Zur Regulierung des Molekulargewichts werden unter den Reaktionsbedingungen monofunktionelle Carbonsäuren wie z.B. Phthalsäure oder deren Anhydrid, Benzoesäure oder Palmitinsäure eingesetzt, die weiterhin mit Alkyl oder Halogen wie Fluor oder Chlor substituiert sein können.

Erfindungsgemäß verwendbare Lactame sind beispielsweise solche der Formel II

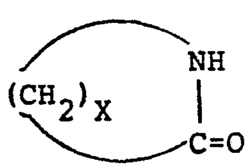

(II),

in welcher x eine ganze Zahl von 2 bis 20 bedeutet.

Vorzugsweise wird Caprolactam eingesetzt.

Anstelle oder in Kombination mit den Lactamen können Polyamide eingesetzt werden, wie sie in DE-AS 1 956 512 beschrieben werden, z.B. Polycapronamid (Nylon 6), Polydodecansäureamid und Polyamide aus Dicarbonsäuren wie z.B. Adipinsäure, Sebacinsäure, Oxalsäure, Dibutylmalonsäure, Isophthalsäure und Terephthalsäure und Diaminen wie Ethylendiamin, Hexamethyldiamin, Decamethylendiaminen und m- und p-Phenylendiamin. Bevorzugt verwendet werden Polycapronamid (Nylon 6) und Polyhexamethylenadipamid (Nylon 66).

Erfindungsgemäß einsetzbare Phenole können durch die Formel (III)

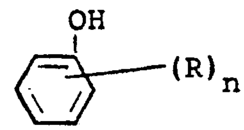

(III),

in welcher

R $C_1$-$C_{20}$-Alkyl, Cycloalkyl oder $C_6$-$C_{12}$-Aryl ist, wobei bei alleinigem Vorliegen von Alkylsubstituenten diese insgesamt mindestens 2 C-Atomen haben müssen,

n für die Zahlen 1,2,3,4 oder 5 steht, wobei für den Fall n>1, die Reste auch unterschiedlich sein können.

Die erfindungsgemäßen Phenole sind mit einem oder mehreren Aryl-Resten mit 6 - 12 C-Atomen und/oder Alkyl-Resten mit 1 - 20 C-Atomen, wobei bei alleinigem Vorliegen von Alkylsubstituenten diese insgesamt mindestens 2 C-Atome haben müssen, und/oder Cycloalkyl-Resten substituiert, die z.B. weiter mit Halogen wie Fluor oder Chlor oder Hydroxyl substituiert sein können, z.B. 2-, 3- oder 4-Phenylphenol, 4-[Phenyl-isopropyl]-phenol, 1- oder 2-Naphthol, 2,2-Bis-[4-hydroxyphenyl]-propan, 2-, 3- oder 4-Cyclohexylphenol, n-Octylphenol, 4-Isopropylphenol, 2,4-Di-tert.-butylphenol, 2,4,6-Tris-trifluormethylphenol, 2,6-Di-tert.-butyl-4-methyl-phenol, Hexadecylphenol und technische Gemische aus gegebenenfalls verzweigten 2-, 4-, 6-Nonyl- und Dodecyl-phenolen. Anstelle der bisfunktionellen Phenole können auch deren nieder- oder hochmolekulare Polyester wie die aus Hydroxybenzoesäure, Isophthalsäure oder Terephthalsäure und 2,2'-Bis[4-hydroxyphenyl]-propan oder 2,2'-Bis-[4-hydroxy-3,5-dimethyl-phenyl]-propan und die entsprechenden Kohlensäureester eingesetzt werden.

Das erfindungsgemäße Verfahren kann in Lösungsmitteln erfolgen, wie dies in DAS 1 770 202 beschrieben wird. Bevorzugt werden als Lösungsmittel Phenole wie Phenol und technische Gemische aus o-, m- und p-Kresolen verwendet.

Bei der Durchführung des erfindungsgemäßen Verfahrens werden die Reaktionskomponenten mit oder ohne Lösungsmittel einige Minuten bis zu mehreren Stunden bei Temperaturen von 0 - 400 °C gehalten. Der Verlauf der Reaktion läßt sich beispielsweise über die Gasentwicklung, den Anstieg der Viskosität und die IR-Spektren verfolgen.

Die Zugabe der erfindungsgemäßen Phenole kann zu Beginn, im Verlaufe oder auch erst nach

Beendigung der Reaktion erfolgen. Eine bevorzugte Ausführungsform besteht darin, die erfindungsgemäßen Phenole in der Zwischenphase vor dem Aufkonzentrieren und der Nachkondensation im Extruder einzutragen. Vorzugsweise wird die Aufkonzentration so gelenkt, daß die erfindungsgemäßen Phenole ganz oder teilweise im Endprodukt verbleiben.

In einer besonderen Ausführungsform wird beispielsweise bei der Herstellung des Polymeren in einem phenolischem Lösungsmittel (z.B. Phenol/technisches Kresol-Gemisch) nach der Polymerisation die Reaktionslösung für zusätzlich 0,5 bis 10 Stunden, vorzugsweise 1 bis 6 Stunden bei einer Temperatur von 200 bis 250° C, vorzugsweise 210 bis 220° C, gehalten.

Diese Temperaturen können durch partielle Verdampfung des Lösungsmittels oder durch Anwendung von Druck bis zu etwa 5 bar erreicht werden.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann das Polymere in einem phenolischen Lösungsmittel hergestelllt, dann aus der Lösung mit einem Nichtlöser wie z.B. Methanol gefällt und auf einem Extruder nachkondensiert werden. Eine bevorzugte Ausführungsform besteht darin, das Polymere in einem Lösungsmittel herzustellen, gegebenenfalls bereits im Kessel zu einer noch fließfähigen Lösung oder einem Schmelzharz aufzukonzentrieren und dann den restlichen Konzentrationsvorgang unter Nachkondensation in einem Eindampfextruder unter Vakuum oder Stickstoff bei Temperaturen von 240 - 400° C, vorzugsweise von 280 - 340° c, auszuführen.

Im allgemeinen werden pro Val Isocyanat ein Val Carbonsäure oder cyclisches Carbonsäureanhydrid und pro Val Carbonsäureanhydrid 0,5 - 2 Val Lactam oder Amid zur Umsetzung gebracht, doch sind auch weitgehende Abweichungen von diesen Mengenverhältnissen möglich. Eine weitere mögliche Ausführungsform besteht darin, überschüssiges Isocyanat mit Di- oder Tricarbonsäuren wie z.B. Adipinsäure, Terephthalsäure, Isophthalsäure oder Trimesinsäure und überschüssige Carbonsäure mit polyfunktionellen Alkoholen, wie z.B. Ethylenglykol, Neopentylglykol, Hexandiol, Trimethylolpropan, Trishydroxyethylisocyanurat, Trishydroxyethylurazol und Polyestern mit endständigen Hydroxygruppen zur Reaktion zu bringen.

Die Herstellung der erfindungsgemäßen Polymeren kann durch Katalysatoren beeinflußt werden, z.B. durch Amine wie Triethylamin, 1,4-Diazobicyclo-(2,2,2)-octan, N-Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen (III)-chlorid, Kobaltacetat, Bleioxid, Bleiacetat, Zinnoctoat, Dibutyl-zinn-dilaurat, Kupferacetylacetonat, Titantetrabutylat, Alkali-phenolate und Natriumcyanid und durch Phosphorverbindungen wie Trialkylphosphin und Methylphospholinoxid.

Die nach dem erfindungsgemäßen Verfahren hergestellten Polyamidimide eignen sich als Thermoplaste und zeichnen sich durch besondere Zugfestigkeit, E-Moduli und Wärmeformbeständigkeitaus. Ihre Eigenschaften können für die verschiedenen Anwendungsgebiete durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern und weiteren Polymeren variiert werden.

Beispiel 1

87 g eines technischen Gemisches aus 80 Teilen 2,4- und 20 Teilen 2,6-Toluylendiisocyanat, 1125 g 4,4'-Diisocyanatdiphenylmethan und 960 g Trimellitsäureanhydrid 2 Stunden bei 170° C, 2 Stunden bei 190° C und 4 Stunden bei 205° C gerührt. Dann werden 1300 g des Lösungsmittelgemisches unter Vakuum abdestilliert und der Rückstand noch 1 Stunde bei 210° C gerührt. Man erhält das Polyamidimid als ca. 80 %ige Schmelze. Die Viskosität $\eta^{25}$, gemessen an einer 15 %igen Lösung in Kresol, beträgt 670 mPas.

Die Schmelze wird mit 92 g eines technischen Gemisches linearer und verzweigter Nonyl-phenole versetzt. Man erhält beim Erkalten ein sprödes Harz, das mit einem Welding-Eindampfextruder bei einer maximalen Manteltemperatur von 310° C und einem Druck von 100 mbar eingedampft und auskondensiert wird. Das Kondensationsprodukt ist ein braunes, transparentes Harz mit einer relativen Viskosität, gemessen an einer 1 %igen Lösung in Kresol bei 25° C, von 2,23.

Das so hergestellte Polyamidimid wird im Spritzgußverfahren bei Temperaturen um 300° C verarbeitet. Man erhält Prüfkörper mit einer Schlagzähigkeit von 109 kJ/m², einer Reißfestigkeit von 100 mPa, einem Zug-E-Modul von 3560 MPa und einer Vicat-Erweichungstemperatur von 177° C.

Beispiel 2

In 100 g eines entsprechend Beispiel 1 hergestellten 80 %igen Polyamidimid-Harzes werden in der Schmelze 4 g 2,2-Bis-[4-hydroxy-phenyl]-propan eingerührt. Die Schmelze wird bei 310° C unter

Stickstoff eingedampft und auskondensiert. Man erhält ein transparentes schmelzbares Harz mit einer relativen Viskosität $\eta$ = 1,85, gemessen an einer 1 %igen Lösung in Kresol bei 25 ° C.

Beispiel 3

100 g eines entsprechend Beispiel 1 hergestellten 80 %igen Polyamidimid-Harzes werden aufgeschmolzen und mit 4 g 2-Phenyl-phenol versetzt. Die Schmelze wird bei 290 ° C unter Stickstoff eingedampft und auskondensiert. Man erhält ein transparentes schmelzbares Harz mit einer relativen Viskosität $\eta$ = 1,94.

Beispiel 4

In 100 g eines entsprechend Beispiel 1 hergestellten 80 %igen Polyamidimid-Harzes werden in der Schmelze 3 g 4-[Phenyl-isopropyl]-phenol eingerührt. Die Schmelze wird bei 300 ° C im Stickstoffstrom eingedampft und auskondensiert. Man erhält ein transparentes schmelzbares Harz mit einer relativen Viskosität $\eta$ = 1,97.

Beispiel 5

100 g eines entsprechend Beispiel 1 hergestellten 80 %igen Polyamidimid-Harzes werden aufgeschmolzen und mit 3,2 g $\beta$-Naphthol versetzt. Die Schmelze wird zuerst bei 250 ° C und dann bei 300 ° C im Stickstoffstrom eingedampft und auskondensiert. Man erhält ein transparentes schmelzbares und elastisches Harz mit der relativen Viskosität $\eta$ = 1,75.

Beispiel 6

In 100 g eines entsprechend Beispiel 1 hergestellten 80 %igen Polyamidimid-Harzes werden in der Schmelze 4,8 g eines oligomeren Polycarbonats aus 2,2-Bis-[4-hydroxyphenyl]-propan mit $\overline{M}$ ≈735 eingerührt. Die Schmelze wird bei 250 ° C und 300 ° C im Stickstoffstrom eingedampft und auskondensiert. Man erhält ein transparentes schmelzbares Harz mit der relativen Viskosität $\eta$ = 1,78 und einer Glastemperatur Tg = 190 ° C.

Beispiel 7

100 g eines entsprechend Beispiel 1 hergestellten 80 %igen Polyamidimid-Harzes werden aufgeschmolzen und mit 7,8 g eines Polyesters aus Terephthalsäure und 2,2-Bis-[4-hydroxyphenyl]-propan versetzt. Die Schmelze wird bei 310 ° C im Stickstoffstrom eingedampft und auskondensiert. Man erhält ein transparentes schmelzbares Harz mit der relativen Viskosität $\eta$ = 1,85.

Beispiel 8

In 100 g eines entsprechend Beispiel 1 hergestellten 80 %igen Polyamidimid-Harzes werden 6,4 g eines Polycarbonats aus 2,2-Bis-[4-hydroxyphenyl]-propan mit einem Molekulargewicht von 20.000 - 25.000 eingerührt. Die Schmelze wird bei 250 ° C und 300 ° C im Stickstoffstrom eingedampft und auskondensiert. Man erhält ein transparentes schmelzbares Harz mit der relativen Viskosität $\eta$ = 1,87.

Beispiel 9

In 200 g Kresol werden 33,9 g Polycapronamid (Nylon 6) gelöst, dann werden 100 g 4,4'-Diisocyanato-diphenylmethan, 16,8 g Hexamethylendiisocyanat und 96 g Trimellitsäureanhydrid eingetragen. Das Reaktionsgemisch wird 2 Stunden bei 170 ° C, 4 Stunden bei 190 ° C und 4 Stunden bei 205 ° C gerührt. Anschließend wird mit 200 g Kresol auf einen Festgehalt von ca. 33 Gew.-% verdünnt. Die Viskosität des Kondensationsproduktes $\eta^{25}$ beträgt, gemessen an einer 15 %igen Lösung in Kresol, 700 mPas.

In die Lösung des Polyamidimids werden 4 g eines technischem Gemisches von Nonylphenolen und 1 g 2,6-Di-tert.-butyl-4-methyl-phenol eingerührt. Dann wird in Stickstoffstrom eingedampft und auskondensiert wobei die Temperatur langsam bis auf 300 ° C gesteigert wird. Man erhält ein transparentes schmelzbares Harz mit der relativen Viskosität $\eta$ = 1,97.

Beispiel 10

In eine Lösung von 452 g Caprolactam in 1840 g Kresol werden bei 120 ° C 890 g 4,4'-Diisocyanato-diphenylmethan, 69,6 g eines Gemisches aus 80 % 2,4- und 20 % 2,6-Toluylendiisocyanat, 9,52 g Phenylisocyanat und 768 g Trimellitsäureanhydrid eingetragen. Die Kondensation zum Polyamidimid wird unter Rühren in 2 Stunden bei 170 ° C, 2 Stunden bei 190 ° C und 4 Stunden bei 205 ° C ausgeführt. Dann wird mit 2440 g Kresol auf einen Festgehalt von 30 Gew.-% verdünnt. Die Viskosität $\eta^{25}$ einer Probe dieser Lösung, die mit Kresol weiter auf einen Festgehalt von 15 Gew.-%

verdünnt wurde, beträgt 350 mPas.

In die 30 %ige Lösung des Polyamidimids werden 73,5 g eines Gemisches technischer Dodecylphenole eingetragen. Die Lösung wird mit einem ZSK-Eindampfextruder bei einer maximalen Manteltemperatur von 320 °C und einem Druck von 400 mbar eingedampft. Man erhält ein transparentes elastisches Harz mit einer relativen Viskosität, gemessen an einer 1 %igen Lösung in Kresol bei 25 °C, von $\eta$ = 2,05.

## Ansprüche

1. Verfahren zur Herstellung von Kresol-löslichen Polyamidimiden aus Polyisocyanaten, cyclischen Polycarbonsäureanhydriden und Lactamen oder Polyamiden, dadurch gekennzeichnet, daß die Herstellung oder Aufarbeitung in Gegenwart von 0,2 - 15 Gew.-% eines oder eines Gemisches einfach oder mehrfach mit Alkyl-Resten mit 1 bis 20 C-Atomen und/oder mit Cycloalkyl-Resten und/oder mit Aryl-Resten mit 6 bis 12 C-Atomen substituierter Phenole erfolgt, wobei bei alleinigem Vorliegen von Alkyl-Substituenten diese insgesamt mindestens 2 C-Atomen haben müssen, und das Polyamidimid in einer ersten Stufe nach einem bekannten Verfahren in einem Lösungsmittel hergestellt und dann in einem Eindampfextruder bei Temperaturen von 240 bis 400 °C unter Vakuum oder Stickstoff aufkonzentriert und auskondensiert wird.

2. Verfahren nach Anspruch 1, dadurch gekennzeichnet, daß bei der Herstellung der Polymeren in einem phenolischen Lösungsmittel nach der Polymerisation die Reaktionslösung für zusätzlich 0,5 bis 10 Stunden bei einer Temperatur von 200 bis 250 °C gehalten wird.

3. Verfahren nach Anspruch 1, dadurch gekennzeichnet, daß als Polycarbonsäureanhydrid Trimellitsäureanhydrid verwendet wird.

## Claims

1. A process for the production of cresol-soluble polyamide imides from polyisocyanates, cyclic polycarboxylic anhydrides and lactams or polyamides, characterized in that production or working up is carried out in the presence of 0.2 to 15% by weight of phenols substituted one or more times by $C_{1-20}$ alkyl radicals and/or by cycloalkyl radicals and/or by $C_{6-12}$ aryl radicals, the alkyl substituents having to contain a total of at least 2 carbon atoms where they are present on their own, or a mixture of such phenols and, in a first step carried out in known manner, the polyamide imide is produced in a solvent and is then concentrated and fully condensed in an evaporation extruder at temperatures of 240 to 400 °C either *in vacuo* or under nitrogen.

2. A process as claimed in claim 1, characterized in that, where the polymers are produced in a phenolic solvent, the reaction solution is kept at a temperature of 200 to 250 °C for another 0.5 to 10 hours.

3. A process as claimed in claim 1, characterized in that trimellitic anhydride is used as the polycarboxylic anhydride.

## Revendications

1. Procédé de préparation de polyamide-imides solubles dans le crésol à partir de polyisocyanates, d'anhydrides d'acides polycarboxyliques cycliques et de lactames ou de polyamides, caractérisé en ce que la préparation ou le traitement subséquent est effectué en présence de 0,2 à 15 % en poids d'un phénol ou d'un mélange de phénols mono- ou poly-substitués par des groupes alkyle en $C_1$-$C_{20}$ et/ou des groupes cycloalkyle et/ou des groupes aryle en $C_6$-$C_{12}$, sous réserve que, lorsqu' il y a uniquement des substituants alkyle, ceux-ci, au total, doivent contenir au moins deux atomes de carbone, et en ce que l'on prépare le polyamide-imide dans un premier stade opératoire par un procédé connu dans un solvant, puis on soumet à concentration et condensation finales dans une extrudeuse évaporatrice à des températures de 240 à 400 °C, sous vide ou en atmosphère d'azote.

2. Procédé selon la revendication 1, caractérisé en ce que, à la préparation des polymères dans un solvant phénolique, et après la polymérisation, on maintient la solution de réaction pendant encore 0,5 à 10 h à une température de 200 à 250 °C.

3. Procédé selon la revendication 1, caractérisé en ce que l'anhydride d'acide polycarboxylique utilisé est l'anhydride trimellitique.